# EUROPEAN PATENT SPECIFICATION

(11) **EP 2 238 726 B1**
(45) Date of publication and mention of the grant of the patent: **02.04.2014**
(21) Application number: 08871572.7
(22) Date of filing: 29.12.2008
(51) Int. Cl.: H04L 5/00, H04W 72/04, H04W 84/02

(54) **Communicating over a wireless link using a superframe that has frames of different types**
Kommunikation über eine drahtlose Verbindung unter Verwendung einer Ueberrahmenstruktur mit Rahmen verschiedener Art
Communication sur une liaison sans fil à l'aide d'une supertrame qui comprend des trames de différents types

(30) Priority: 21.01.2008 US 22481 P; 17.03.2008 US 37114 P
(43) Date of publication of application: 13.10.2010
(73) Proprietor: Apple Inc., Cupertino, CA 95014 (US)
(72) Inventor: TEE, Lai, King, Dallas TX 75230 (US); SIVANESAN, Kathiravetpillai, Richardson TX 75082 (US); FONG, Mo-han, Ottawa, ON K1S 3J7 (CA)
(74) Representative: Lang, Johannes
(86) International application number: PCT/US2008/088393
(87) International publication number: WO 2009/094093

(56) References cited:
- US-A1- 2007 121 531
- US-A1- 2007 291 634
- US-B1- 6 580 705
- "802.16m Frame Structure to Enable Legacy Support, Technology Evolution, and Reduced Latency ; C80216m-07_263", IEEE DRAFT; C80216M-07_263, IEEE-SA, PISCATAWAY, NJ USA, vol. 802.16m, 7 November 2007 (2007-11-07) , pages 1-7, XP017632013, [retrieved on 2007-11-08]
- "Proposal for IEEE 802.16m Frame Structure for Single Band Operation ; C80216m-08_041", IEEE DRAFT; C80216M-08_041, IEEE-SA, PISCATAWAY, NJ USA, vol. 802.16m, 16 January 2008 (2008-01-16) , pages 1-7, XP017632268, [retrieved on 2008-01-17]

## Description

### Technical Field

The invention relates generally to communicating, in a given session over a wireless link, a data container structure that includes partitions of different types.

### Background

Various wireless access technologies have been proposed or implemented to enable mobile stations to communicate with other mobile stations or with wired terminals coupled to wired networks. Examples of wireless access technologies include GSM (Global System for Mobile communications) or UMTS (Universal Mobile Telecommunications System) technologies, defined by the Third Generation Partnership Project (3GPP); CDMA 2000 (Code Division Multiple Access 2000) technologies, defined by 3GPP2; or other wireless access technologies.

Another type of wireless access technology is the WiMax (Worldwide Interoperability for Microwave Access) technology. WiMax is based on the IEEE (Institute of Electrical and Electronics Engineers) 802.16 standards. The WiMax wireless access technology is designed to provide wireless broadband access.

To support even higher data rates, the IEEE is also developing a new wireless standard referred to as IEEE 802.16m. It is anticipated that 802.16m is able to support wireless data rates of up to 1 gigabits per second (Gbps). The ability to reach such high data rates is based on the use of multiple input, multiple output (MIMO) technology. MIMO refers to the use of multiple antennas at the transmit side and at the receive side, such that data can be transmitted from multiple antennas of a transmitter over multiple paths for receipt by antennas of a receiver.

As new wireless access technologies such as IEEE 802.16m are developed, wireless access networks have to address the issue of presence of both legacy mobile stations and mobile stations that support a new wireless access technology. For example, in a WiMax wireless access network, once 802.16m is implemented, it is likely that the WiMax wireless access network would have to support communications with both legacy WiMax mobile stations (those mobile stations that support IEEE 802.16e access, for example) and 802.16m mobile stations. If both legacy mobile stations and 802.16m mobile stations are present, a base station that supports wireless access by such mobile stations would have to handle both uplink and downlink data exchanged between the different types of mobile stations and the base station. However, conventionally, an efficient mechanism has not been proposed or defined to enable efficient wireless communication with legacy WiMax mobile stations and 802.16m mobile stations.

Document "802.16m Frame Structure to Enable Legacy Support, Technology Evolution, and Reduced Latency ; C80216m-07_263", 7 November 2007, proposes a low-latency 802.16m Frame Structure, with which provision of legacy support for the wireless MAN-OFDMA Reference System is intended.

Document "Proposal for IEEE 802.16m Frame Structure for Single Band Operation ; C80216m-08_041", 16 January 2008, discloses that IEEE 802.16m and legacy systems are overlaid in a TDM fashion when both occupy the same bandwidth. Legacy TDM zone and IEEE 802.16m TDM zone are defined within a DL sub-frame and a UL sub-frame of a TDD frame.

### Summary

The present invention relates to a method, a wireless communication node and a storage device as set forth in claims 1, 6 and 13. Further embodiments are set forth in the dependent claims.

Other or alternative features will become apparent from the following description, from the drawings, and from the claims.

### Brief Description Of The Drawings

Fig. 1 is a block diagram of a communications network that includes a wireless access network that supports different types of mobile stations (legacy mobile stations and new technology mobile stations), in accordance with preferred embodiments of the invention.
Figs. 2 and 3 illustrate frames of types 1 and 2, in accordance with a preferred embodiment.
Fig. 4 illustrates a superframe that includes a concatenation of frames of type 1 and frames of type 2, in accordance with a preferred embodiment.
Figs. 5 and 6 illustrate frames of types 1 and 2, in accordance with another preferred embodiment.
Fig. 7-9 illustrate superframes according to further preferred embodiments.

### Detailed Description

In the following description, numerous details are set forth to provide an understanding of some embodiments. However, it will be understood by those skilled in the art that some embodiments may be practiced without these details and that numerous variations or modifications from the described embodiments may be possible.

In general, according to preferred embodiments, a technique or mechanism is provided to wirelessly communicate data associated with different types of mobile stations, where the data is carried in a flexible hybrid data container structure including a configurable concatenation of different types of partitions. The data container structure in some preferred embodiments is referred to as a "superframe," where a "superframe" refers to any data structure that contains multiple partitions (sometimes referred to as "frames") of data. In the ensuing discussion, reference is made to flexible hybrid superframes that contain configurable concatenations of frames of different types-it is noted that the same or similar techniques can be applied to other types of flexible hybrid data container structures and partitions.

The different types of frames in the superframe can be used to carry uplink data (from mobile station to base station) and downlink data (from base station to mobile station), as well as to carry control information. Collectively, uplink/downlink data and control information can be referred to as "information." Uplink or downlink "data" refers to bearer traffic, such as voice or packet data, as examples.

Different types of mobile stations refer to mobile stations that operate according to different wireless access technologies. In one specific example, one wireless access technology is the WiMax (Worldwide Interoperability for Microwave Access) technology, as defined by the IEEE (Institute of Electrical and Electronics Engineers) 802.16 standards, including the IEEE 802.16e standard. Another wireless access technology is the 802.16m technology.

The frames of different types contained in a hybrid superframe can have different structures. For example, a superframe can include at least one first frame of a first type having a first structure, and at least one second frame of a second type having a second, different structure. The number of first frames and number of second frames are configurable to provide flexibility.

In a preferred embodiment, the hybrid superframe includes at least one first frame of a first type that contains time division multiplexed data, and a second frame of a second type that contains frequency division multiplexed data. Each of the frames is able to carry data of different types of mobile stations, such as WiMax mobile stations and 802.16m mobile stations. Note that reference to specific standards is provided for purposes of explanation, as embodiments of the invention can cover wireless access technologies according to other standards.

"Time division multiplexed" data refers to data having multiple portions that are communicated (multiplexed) in multiple time slots. An example of time multiplexed data includes a first data portion being communicated in a first time slot on a given carrier, and a second data portion communicated in a second time slot in the same carrier.

"Frequency division multiplexed data" refers to data having multiple portions communicated on different carriers of different frequencies. Thus, for example, a first data portion is communicated in a first carrier of a first frequency, and a second data portion is communicated in a second carrier of a second frequency. In the WiMax context, "frequency division multiplexed data" refers to data having multiple portions communicated on different subcarriers of different frequencies. The terms "carrier" and "subcarrier" are used interchangeably.

In the above embodiment, the concatenated different types of frames in the superframe are frames that use different multiplexing schemes (a first frame that contains time division multiplexed data and a second frame that contains frequency division multiplexed data).

In another preferred embodiment, the concatenated frames of a hybrid superframe can include at least one first frame (of type 1) having a single downlink subframe (to communicate downlink information that includes uplink control and downlink control and data) and a single uplink subframe (to communicate uplink information), and at least one second frame (of type 2) having flexible and variable numbers of uplink and downlink subframes.

A frame of type 2 can have subframes of unequal lengths such that there is flexibility in the number of uplink and downlink subframes that can be provided in a frame. For example, a frame can have one or more uplink subframes and one or more downlink subframes. A first frame can have different numbers of uplink subframes and/or downlink subframes than a second frame. The lengths of the subframes (uplink and/or downlink) are variable such that more than one uplink subframe and/or more than one downlink subframe can be fit into a frame. This flexibility in defining subframes of a frame allows for better wireless communication performance with lower latency and higher throughput.

In accordance with preferred embodiments, the ability to include frames of different types within a hybrid superframe allows for more flexible and efficient communication of data in a wireless access network that has to support different types of mobile stations, including legacy mobile stations and new technology mobile stations. A "legacy" mobile station refers to a mobile station that operates according to an older wireless access technology, whereas "new technology mobile station" refers to a mobile station that operates according to a more recent (or newer) wireless access technology. In one example, a legacy mobile station refers to a mobile station that operates according to the WiMax wireless access technology (e.g., as defined by IEEE 802.16e), whereas a new technology mobile station refers to a mobile station that operates according to the IEEE 802.16m wireless access technology. More generally, instead of referring to legacy mobile stations and new technology mobile stations, reference can be made to different types of mobile stations that support different types of wireless access technologies.

In the ensuing discussion, reference is made to legacy or WiMax mobile stations and to 802.16m mobile stations. However, the same techniques according to preferred embodiments can be used with mobile stations that operate according to other wireless access technologies.

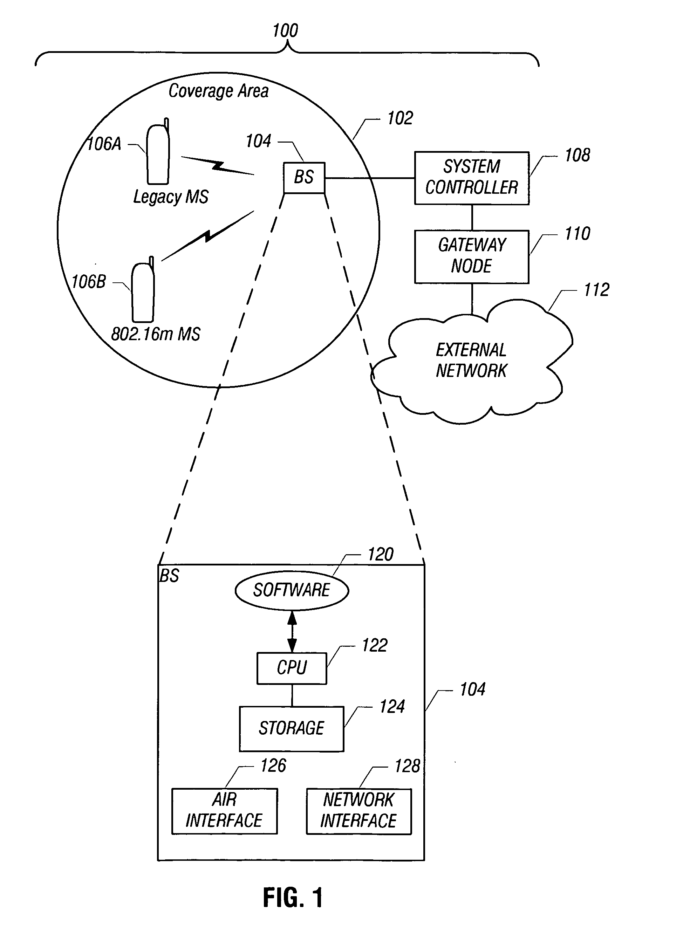

Fig. 1 illustrates a communications network that includes a wireless access network 100 that has a base station 104 associated with a coverage area 102. The wireless access network 100 includes multiple base stations associated with respective coverage areas.

The base station 104 is able to communicate with mobile stations 106A and 106B in the coverage area 102 of the base station 104. The base station 104 is able to support communications with both legacy mobile stations, such as legacy mobile station 106A, and 802.16m mobile station 106B.

The base station 104 can include a base transceiver station (BTS) to perform radio frequency (RF) communications with mobile stations in the coverage area 102. Also, the base station 104 can include a base station controller or radio network controller for controlling tasks associated with the base station.

As further depicted in Fig. 1, the base station 104 is connected to a system controller 108. If the wireless access network 100 is a WiMax access network, as defined by the IEEE 802.16 standards, then the system controller 108 can be an access service network (ASN) gateway. The system controller 108 is in turn connected to a gateway node 110, which connects the wireless access network 100 to an external network 112, such as the Internet. In the WiMax context, the gateway node 110 is referred to as a connectivity service network (CSN) node.

As further depicted in Fig. 1, the base station 104 can include software 120 executable on one or more central processing units (CPUs) 122, which is (are) connected to a storage 124. The base station 104 includes an air interface 126 to wirelessly communicate with mobile stations, and a network interface 128 to communicate with the system controller 108.

The software 120 depicted in Fig. 1 is representative of various software modules that are provided in the base station 104, including software modules in the data plane and control plane of the base station 104. Among the tasks that can be performed by the software 120 of the base station 104 is the ability to communicate data in superframes according to preferred embodiments. The software 120 can also include a scheduler to schedule communication of data associated with different mobile stations. Note that each mobile station 106A or 106B can similarly include software executable on CPU(s) that is (are) connected to storage.

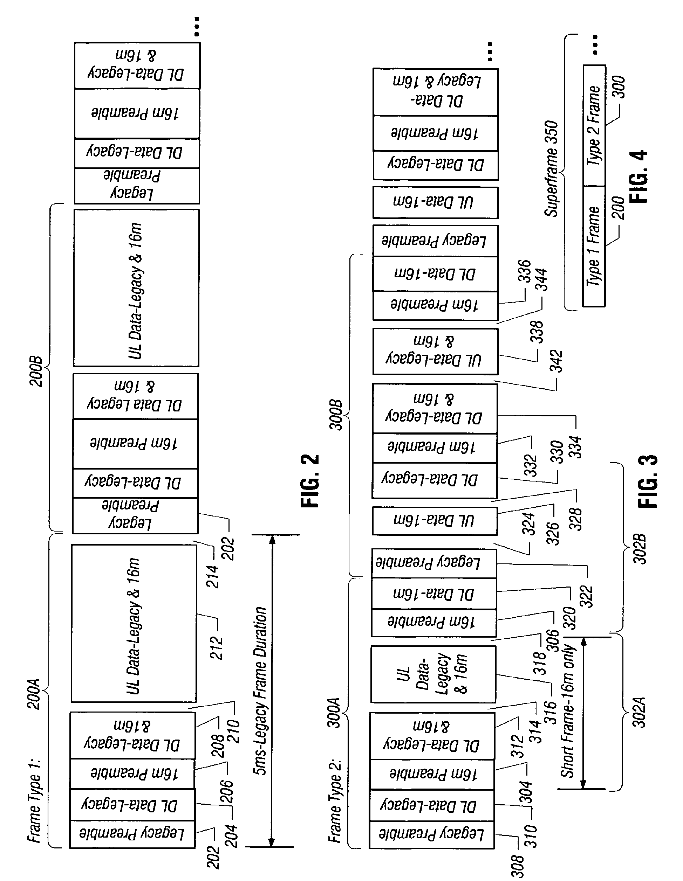

Fig. 2 shows frames 200 (200A and 200B depicted) of type 1. Each frame 200 includes a downlink subframe (to carry downlink information from the base station to the mobile stations) and an uplink subframe (to carry uplink information from mobile stations to the base station). The frame duration (or frame length) of each frame starts at the beginning of a legacy preamble in the frame and ends at the beginning of a legacy preamble in the next frame. For example, in Fig. 2, the frame duration of frame 200A starts at the beginning of the legacy preamble 202 contained in the frame 200A, and ends at the beginning of the next legacy preamble 202 contained in the next frame 200B. Each of the frames 200A and 200B can be referred to as legacy frames (since they are defined between legacy preambles).

Generally, the legacy preamble is provided on the downlink by a base station and contains control information to allow a mobile station to acquire a wireless signal and to synchronize the mobile station with the base station. The preamble can also include information that identifies the modulation scheme, transmission rate, and length of time to transmit the entire frame. In addition, the legacy preamble can include a frame control header and downlink/uplink MAP information that defines resources to be used for downlink and uplink communications, and the modulation and coding schemes included in scheduling grants. A legacy preamble is a preamble defined by IEEE 802.16e, in one exemplary embodiment.

The legacy preamble 202 in the frame 200A is contained in the downlink subframe of the frame 200A. The downlink subframe of the frame 200A also includes the following: a segment 204 to carry legacy downlink data (downlink data for legacy mobile stations) that is transmitted from the base station to the mobile stations; a 802.16m preamble 206, which is a preamble defined by IEEE 802.16m; and a segment 208 that includes both legacy and 802.16m downlink data.

The 802.16m preamble 206 can include downlink map (DL-MAP) information that defines resources to be used for communicating downlink data from the base station to the mobile stations. The DL-MAP information provides information regarding start times for transmission of downlink data to specific mobile stations by the base station. The 802.16m preamble 206 can also include a preamble sequence and/or a synchronization channel to support 802.16m mobile stations.

As depicted in Fig. 2, a 16m frame can be defined between two consecutive 16m preambles-as depicted in Fig. 2, such a 16m frame is offset (shifted) with respect to the legacy frames 200A, 200B.

The resources on which downlink legacy and 802.16m data in the segment 208 of the downlink subframe are carried can be specified by a scheduler in the base station. The assigned resources used to carry the downlink legacy and 802.16m data to the mobile stations are identified in the DL-MAP information provided to the mobile stations in the 802.16m preamble 206.

Following the downlink subframe, a gap 210 is provided that represents the switching time between the communication of downlink data and the communication of uplink data. Following the gap 210, an uplink subframe 212 is communicated that contains uplink data for both legacy and 802.16m mobile stations. Again, the resources at which mobile stations can transmit the uplink data of the uplink subframe 212 are determined by the scheduler in the base station. Following the uplink subframe, another gap 214 is provided to switch between uplink transmission and downlink transmission in the subsequent frame 200B.

As shown in Fig. 2, each frame 200 of type 1 has one downlink subframe and one uplink subframe.

Fig. 3 shows frames 300 (300A and 300B depicted) of type 2. Within each frame 300, there can be more than one downlink subframe and/or more than one uplink subframe. In fact, as shown in Fig. 3, the downlink and uplink subframes can be defined to have varying length such that there is flexibility in the number of downlink and uplink subframes included within a legacy frame (300A or 300B). The legacy frame 300A has two switching points (for switching between uplink and downlink transmissions), and the legacy frame 300B has four switching points.

The frame 300A includes a first downlink subframe that includes segments 308, 310, 304, and 312 (segment 308 is a legacy preamble, segment 310 carries legacy downlink data, segment 304 carries a 802.16m preamble, and segment 312 carries both legacy and 802.16m downlink data). After a gap 314 (corresponding to a downlink-uplink switching point), an uplink subframe 316 is provided in the frame 300A, where the uplink subframe 316 carries both legacy and 802.16m uplink data. Following another gap 318 (corresponding to an uplink-downlink switching point), a second downlink subframe is provided, where the second downlink subframe includes a 802.16m preamble 306, and a segment 320 containing 802.16m downlink data.

As depicted, the three subframes in the frame 300A are of different lengths.

The frame duration of each legacy frame 300 is the same frame duration as each legacy frame 200 in Fig. 2; in other words, the frame duration of each legacy frame 300 is defined between the beginning of one legacy preamble and the beginning of the next legacy preamble. However, in addition to this legacy frame structure (having frame duration defined by legacy preambles), each legacy frame 300 also contains a 802.16m frame 302A (Fig. 3), which is of shorter length than the legacy frame.

The shorter-duration 802.16m frame 302A is defined between the beginning of a first 802.16m preamble 304 and the beginning of the next 802.16m preamble 306. Note that both 802.16m preambles 304 and 306 are provided in the same frame 300A. The second frame 300B shown in Fig. 3 also similarly includes two 802.16m preambles 332 and 336 that define a respective 802.16m frame. Also, note that as depicted in Fig. 3, two consecutive 802.16m frames 302A and 302B are provided within the duration of one legacy frame, except that the two consecutive 802.16m frames 302A and 302B are offset with respect to each legacy frame. The 802.16m frame 302B is defined between 16m preambles 306 and 332.

The second frame 300B includes a first downlink subframe that includes the legacy preamble 322; a first uplink subframe 326 that contains 802.16m uplink data; a second downlink subframe that includes a legacy downlink data segment 330, the 802.16m preamble 332, and a segment 334 carrying legacy and 802.16m downlink data; a second uplink subframe 338 that carries legacy and 802.16m uplink data; and a third downlink subframe that includes the 802.16m preamble 336 and a 802.16m downlink data segment 340.

Gaps 324, 328, 342, and 344 are provided between respective pairs of uplink and downlink subframes to switch between uplink and downlink transmissions.

In accordance with some embodiments, as depicted in Fig. 4, a hybrid superframe 350 can include a configurable concatenation of frames 200 of type 1 and frames 300 of type 2. More specifically, the superframe 350 can include X number of frames 200 of type 1 (X ≥ 1) and Y number of frames 300 of type 2 (Y ≥ 1). Even more generally, the superframe 350 can include X number of frames 200 of type 1 (X ≥ 0) and Y number of frames 300 of type 2 (Y ≥ 0). The values of X and Y are configurable based on the number of legacy and 802.16m mobile stations in a particular coverage area that is served by a base station. The ability to flexibly concatenate different frame types into one superframe provides enhanced flexibility to allow for more efficient support of both legacy and 802.16m wireless communications by a base station.

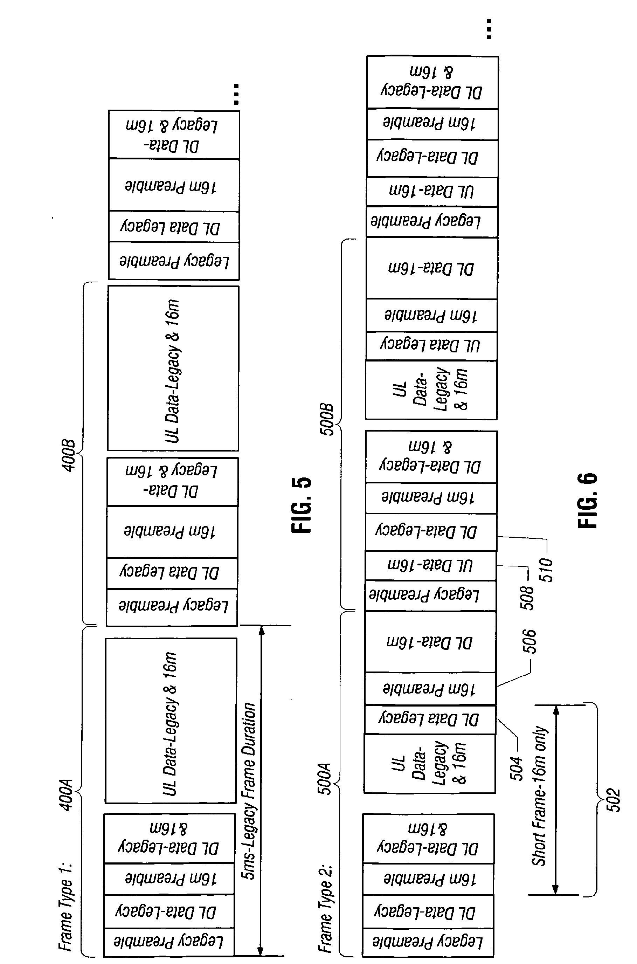

For Figs. 2 and 3, it is assumed that the base station has one base station transceiver that supports both legacy and 802.16m communication. In a different embodiment, the base station can include a first dedicated transceiver for supporting legacy communications, and a second transceiver for supporting 802.16m communications. Figs. 5 and 6 illustrate frames of type 1 and frames of type 2 for the scenario where the base station includes separate, dedicated transceivers for legacy and 802.16m wireless communications. As depicted in Fig. 5, the frames 400 of type 1 include a first frame 400A and second frame 400B. The structure of each frame 400 is the same structure as frame 200 depicted in Fig. 2.

However, the structure of frames 500 of type 2 (500A and 500B depicted in Fig. 6) is different from the structure of frames 300 depicted in Fig. 3. As with frame 300 in Fig. 3, each frame 500 in Fig. 6 can include more than one downlink subframe and/or more than one uplink subframe. Also, each frame 500 includes two 802.16m preambles that define a 802.16m frame structure of a shorter length (represented as 502 in Fig. 6) than the legacy frame structure 500 (similar to the structure shown in Fig. 3).

A difference between the frame 500 in Fig. 6 and the frame 300 in Fig. 3 is that in each frame 500, under certain conditions, no switching gaps need be provided when switching between uplink and downlink transmissions of data according to different technologies (legacy versus 802.16m). One example of this occurs between a segment 504 containing legacy uplink data followed by a downlink 802.16m preamble 506. Normally, if the same transceiver was used to perform both legacy and 802.16m transmissions, a gap would have to be provided between segments 504 and 506. However, since dedicated transceivers are provided in the base station for respective legacy and 802.16m communications, the legacy transceiver can be used to transmit the legacy uplink data in segment 504, and the 802.16m transceiver can be used to transmit the 802.16m preamble 506 immediately after the legacy uplink data segment 504. By avoiding switching gaps under certain conditions, more information can be sent in each frame 500 for enhanced bandwidth efficiency.

Another example where a switching gap is not needed is between transmission of a 802.16m uplink data segment 508 and a legacy downlink data segment 510 in frame 500B.

A hybrid superframe can include a configurable concatenation of X number of frames 400 of type 1, and Y number of frames 500 of type 2.

In accordance with alternative preferred embodiments, a superframe can include a concatenation of other types of frames, where in some of the frames, legacy data and 802.16m data are provided in time division multiplexed (TDM) manner, and where in other frames, legacy data and 802.16m data are provided in a frequency division multiplexed (FDM) manner.

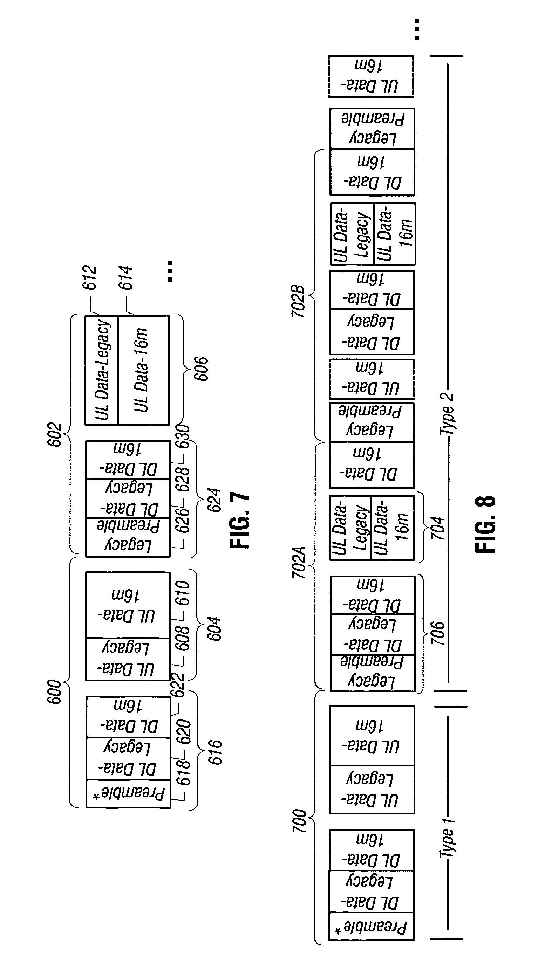

For example, as shown in Fig. 7, a first frame 600 can include a downlink subframe 616 and an uplink subframe 604. In the uplink subframe 604, the legacy and 802.16m uplink data are divided into distinct TDM subpartitions 608 and 610. The TDM subpartition 608 includes time slots carrying just legacy uplink data, and the TDM subpartition 610 includes time slots carrying just 802.16m uplink data. In this first frame 600, the legacy data and 802.16m data in the downlink subframe 616 are also provided in distinct TDM subpartitions 620 and 622. Alternatively, instead of providing legacy data and 802.16m data in distinct TDM subpartitions, the legacy data and 802.16m data can be mixed and communicated based on scheduling.

In a second frame 602, a downlink subframe 624 also includes legacy data and 802.16m data in distinct TDM subpartitions 628 and 630. However, an uplink subframe 606 in the second frame 602 includes distinct FDM subpartitions 612 and 614 for carrying respective legacy and 802.16m uplink data. The uplink FDM subpartition 612 includes a group of subcarriers that carry legacy uplink data, and the uplink FDM subpartition 614 includes another group of subcarriers that carry 802.16m uplink data.

The first frame 600 thus includes a TDM downlink subframe 616 and a TDM uplink subframe 604, and the second frame 602 includes a TDM downlink subframe 624 and an FDM uplink subframe 606.

In an alternative embodiment, it may also be possible to configure one of the downlink subframes 616 and 624 to carry FDM data.

Together, the concatenated frames 600 and 602 make up a hybrid superframe. The superframe has a superframe preamble 618 that is provided at the beginning of the downlink subframe 616 in the first frame 600. The preamble 618 includes a superframe header as well as a legacy preamble. The superframe header, which can be communicated through a broadcast control channel (BCCH), for example, can specify whether uplink TDM and uplink FDM subframes are to be used. Also, within each downlink or uplink subframe, the superframe can specify the legacy-to-16m partition ratio to specify the amount of each subframe to allocate to legacy data versus 802.16m data. Also, the superframe header can specify the number of downlink/uplink switching points per frame. Typically, the number of switching points between uplink and downlink data is two, although a greater number can be supported in other implementations.

The superframe depicted in Fig. 7 includes type 1 frames 600 and 602. A superframe depicted in Fig. 8, on the other hand, contains a concatenation of both type 1 frames and type 2 frames. In Fig. 8, a frame 700 is a type 1 frame, while frames 702A and 702B are each type 2 frames. In each frame 702 (702A or 702B), a subframe of a shorter duration can be specified, such as uplink subframe 704 (which has a shorter duration than the downlink subframe 706, which has the same length as each of the subframes in the type 1 frame 700. In each frame 702 of type 2, an uplink subframe can be either an uplink TDM subframe or an uplink FDM subframe.

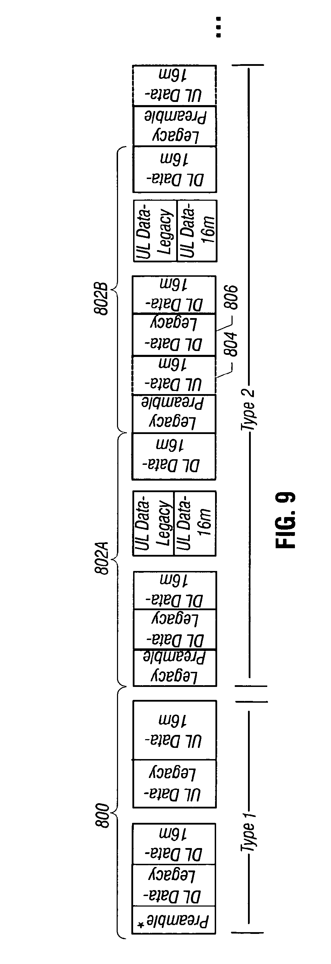

The superframes depicted in Figs. 7 and 8 assume a scenario in which the same base station transceiver is used to support both legacy and 802.16m communications. Fig. 9 shows a scenario in which distinct base station transceivers are used to support legacy and 802.16m communications. In Fig. 9, a frame 800 of type 1 has the same structure as the frame 700 of type 1 in Fig. 8. The structure of the frame 802A of type 2 is also the same structure as the frame 702A of type 2 in Fig. 8. However, in frame 802B of type 2 in Fig. 9, a switching gap can be omitted when switching between transmission of a 802.16m uplink data segment 804 and transmission of a legacy downlink data segment 806, similar to the omission of switching gaps in the frames 500A and 500B of Fig. 6.

The flexible hybrid superframes discussed above enable an efficient manner to evolve from legacy wireless access communications to an advanced wireless access communications. As the number of legacy mobile stations in the wireless network varies depending upon the deployment, the frame structure configuration can be changed relatively easily to accommodate such varying number of legacy mobile stations. Also, system performance can be optimized by using either uplink TDM or uplink FDM subframes. Also, flexibility is provided in defining the number of switching points between uplink and downlink transmissions. For example, the re-transmission delay (delay between transmission of original data and re-transmission of the data due to a negative acknowledgment) can be made lower with a greater number of downlink/uplink switching points. Reduced latency leads to improved quality of service.

The tasks involved in communicating data in superframes according to preferred embodiments can be controlled by software. Instructions of such software are executed on a processor (e.g., CPU 122 in Fig. 1). The processor includes microprocessors, microcontrollers, processor modules or subsystems (including one or more microprocessors or microcontrollers), or other control or computing devices. A "processor" can refer to a single component or to plural components.

Data and instructions (of the software) are stored in respective storage devices, which are implemented as one or more computer-readable or computer-usable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs).

In the foregoing description, numerous details are set forth to provide an understanding of the present invention. However, it will be understood by those skilled in the art that the present invention may be practiced without these details. While the invention has been disclosed with respect to a limited number of embodiments, those skilled in the art will appreciate numerous modifications and variations therefrom. It is intended that the appended claims cover such modifications and variations as fall within the scope of the invention.

## Claims

1. A method performed by a wireless communications node, comprising:
communicating, over a wireless link, data in a superframe that includes a configurable concatenation of frames of different types, which carry information according to different wireless access technologies;
providing, in a first frame (700) of the frames of different types, first uplink data for a first type of mobile station that operates according to a first wireless access technology, and second uplink data for a second type of mobile station that operates according to a second, different wireless access technology, wherein the first uplink data is time division multiplexed with the second uplink data; and
providing, in a second frame (702A) of the frames of different types, third uplink data for the first type of mobile station, and fourth uplink data for the second type of mobile station, wherein the third uplink data is frequency division multiplexed with the fourth uplink data in the second frame.

2. The method of claim 1, wherein communicating the data in the superframe carrying information according to different wireless access technologies comprises communicating the data in the superframe carrying information according to a WiMax wireless access technology and information according to an IEEE 802.16m wireless access technology.

3. The method of claim 1, further comprising:
providing a third frame containing time division multiplexed downlink data for different types of mobile stations.

4. The method of claim 1, wherein the first type of mobile station includes at least one WiMax mobile station, and the second type of mobile station includes at least one IEEE 802.16m mobile station.

5. The method of claim 1, wherein the frames of different types include a first frame having subframes of equal length, and a second frame having subframes of a different length.

6. A wireless communications node comprising:
an interface to a wireless link; and
a processor configured to:
communicate data inserted in a superframe for carrying frames over the wireless link, wherein the superframe includes a configurable concatenation of frames of different types to carry information according to different wireless access technologies;
wherein a first frame (700) of the frames of different types includes first uplink data for a first type of mobile station that operates according to a first wireless access technology, and second uplink data for a second type of mobile station that operates according to a second, different wireless access technology, wherein the first uplink data is time division multiplexed with the second uplink data; and
a second frame (702A) of the frames of different types includes third uplink data for the first type of mobile station, and fourth uplink data for the second type of mobile station, wherein the third uplink data is frequency division multiplexed with the fourth uplink data in the second frame.

7. The wireless communications node of claim 6, wherein the superframe has a header that specifies a configurable number of frames of each of the different types.

8. The wireless communications node of claim 7, wherein the superframe header specifies one or more of the following: (1) whether time division multiplexed and frequency division multiplexed subframes are to be used; (2) a ratio of an amount of data according to a first wireless access technology to an amount of data according to a second wireless access technology; and (3) a number of downlink/uplink switching points per frame.

9. The wireless communications node of claim 8, wherein each of the first and second frames includes time division multiplexed downlink data.

10. The wireless communications node of claim 6, wherein the frames of different types include a first frame having subframes of equal length, and a second frame having subframes of different lengths.

11. The wireless communications node of claim 10, wherein the first frame has a time length defined between headers of a first wireless access technology, and the first frame includes a single header according to a second, different wireless access technology, and wherein the second frame has a time length defined between headers of the first wireless access technology, and the second frame includes plural headers according to the second wireless access technology.

12. A storage device comprising at least one computer-readable storage medium containing instructions that when executed cause a wireless communications node to perform a method according to any of claims 1-5.

## Patentansprüche

1. Verfahren, das von einem drahtlosen Kommunikationsknoten durchgeführt wird, aufweisend:
Kommunizieren, über eine drahtlose Verbindung, von Daten in einem Super-Frame, der eine konfigurierbare Konkatenation von Frames verschiedener Typen umfasst, die Informationen gemäß verschiedener drahtloser Zugangstechnologien befördern;
Bereitstellen in einem ersten Frame (700) der Frames verschiedener Typen erster Uplink-Daten für einen ersten Typ einer mobilen Station, die gemäß einer ersten drahtlosen Zugangstechnologie arbeitet, und zweiter Uplink-Daten für einen zweiten Typ einer mobilen Station, die gemäß einer zweiten, anderen drahtlosen Zugangstechnologie arbeitet, wobei die ersten Uplink-Daten mit den zweiten Uplink-Daten zeitgemultiplext sind; und
Bereitstellen in einem zweiten Frame (702A) der Frames verschiedener Typen dritter Uplink-Daten für den ersten Typ einer mobilen Station und vierter Uplink-Daten für den zweiten Typ einer mobilen Station, wobei die dritten Uplink-Daten mit den vierten Uplink-Daten in dem zweiten Frame frequenzgemultiplext sind.

2. Verfahren nach Anspruch 1, wobei das Kommunizieren der Daten in dem Super-Frame, der Informationen gemäß verschiedener drahtloser Zugangstechnologien befördert, ein Kommunizieren der Daten in dem Superframe aufweist, der Informationen gemäß einer WiMax drahtlosen Zugangstechnologie und Informationen gemäß einer IEEE 802.16m drahtlosen Zugangstechnologie befördert.

3. Verfahren nach Anspruch 1, ferner aufweisend:
Bereitstellen eines dritten Frame, der zeitgemultiplexte Downlink-Daten für verschiedene Typen von mobilen Stationen enthält.

4. Verfahren nach Anspruch 1, wobei der erste Typ einer mobilen Station zumindest eine WiMax mobile Station umfasst und der zweite Typ einer mobilen Station zumindest eine IEEE 802.16m mobile Station umfasst.

5. Verfahren nach Anspruch 1, wobei die Frames verschiedener Typen einen ersten Frame mit Unterframes gleicher Länge und einen zweiten Frame mit Unterframes verschiedener Längen enthalten.

6. Drahtloser Kommunikationsknoten aufweisend:
eine Schnittstelle zu einer drahtlosen Verbindung; und
einen Prozessor, der konfiguriert ist:
Daten zu kommunizieren, die in einem Super-Frame zum Befördern von Frames über die drahtlose Verbindung eingefügt sind, wobei der Super-Frame eine konfigurierbare Konkatenation von Rahmen verschiedener Typen umfasst, um Informationen gemäß verschiedener drahtloser Zugangstechnologien zu befördern;
wobei ein erster Frame (700) der Frames verschiedener Typen erste Uplink-Daten für einen ersten Typ einer mobilen Station, die gemäß einer ersten drahtlosen Zugangstechnologie arbeitet, und zweite Uplink-Daten für einen zweiten Typ einer mobilen Station, die gemäß einer zweiten, anderen drahtlosen Zugangstechnologie arbeitet, umfasst, wobei die ersten Uplink-Daten mit den zweiten Uplink-Daten zeitgemultiplext sind; und
ein zweiter Frame (702A) der Frames verschiedener Typen dritte Uplink-Daten für den ersten Typ einer mobilen Station und vierte Uplink-Daten für den zweiten Typ einer mobilen Station umfasst, wobei die dritten Uplink-Daten mit den vierten Uplink-Daten in dem zweiten Frame ferquenzgemultiplext sind.

7. Drahtloser Kommunikationsknoten nach Anspruch 6, wobei der Super-Frame einen Header hat, der eine konfigurierbare Anzahl von Frames von jedem der verschiedenen Typen spezifiziert.

8. Drahtloser Kommunikationsknoten nach Anspruch 7, wobei der Header des Super-Frame einen oder mehrere der Folgenden spezifiziert:
(1) ob die zeitgemultiplexten und frequenzgemultiplexten Unterframes zu verwenden sind; (2) ein Verhältnis einer Menge von Daten gemäß einer ersten drahtlosen Zugangstechnologie zu einer Menge von Daten gemäß einer zweiten drahtlosen Zugangstechnologie; und (3) eine Anzahl von Downlink-/Uplink-Umschaltungspunkten pro Frame.

9. Drahtloser Kommunikationsknoten nach Anspruch 8, wobei jeder der ersten und der zweiten Frames zeitgemultiplexte Downlink-Daten umfasst.

10. Drahtloser Kommunikationsknoten nach Anspruch 6, wobei die Frames verschiedener Typen einen ersten Frame mit Unterframes gleicher Länge und einen zweiten Frame mit Unterframes verschiedener Längen umfassen.

11. Drahtloser Kommunikationsknoten nach Anspruch 10, wobei der erste Frame eine Zeitlänge hat, die zwischen den Headern einer ersten drahtlosen Zugangstechnologie definiert ist, und der zweite Frame einen einzelnen Header gemäß einer zweiten, anderen drahtlosen Zugangstechnologie umfasst und wobei der zweite Frame eine Zeitlänge hat, die zwischen Headern der ersten drahtlosen Zugangstechnologie definiert ist, und der zweite Frame mehrere Header gemäß der zweiten drahtlosen Zugangstechnologie umfasst.

12. Speichervorrichtung, die zumindest ein Computer-lesbares Medium aufweist, das Instruktionen enthält, die, wenn ausgeführt, einen drahtlosen Kommunikationsknoten veranlassen, ein Verfahren nach einem der Ansprüche 1 bis 5 auszuführen.

## Revendications

1. Un procédé exécuté par un noeud de communication sans fil, comprenant:
la communication, sur une liaison sans fil, de données dans une supertrame qui inclut une concaténation configuration de trames de types différents, qui véhiculent des informations selon des technologies d'accès sans fil différentes;
la délivrance, dans une première trame (700) des trames de types différents, de premières données de liaison montante pour un premier type de station mobile qui opère selon une première technologie d'accès sans fil, et des secondes données de liaison montante pour un second type de station mobile qui opère selon une seconde technologie d'accès sans fil différente, les premières données de liaison montante étant multiplexées par division temporelle avec les secondes données de liaison montante; et
la délivrance, dans une seconde trame (702A) des trames de types différents, de troisièmes données de liaison montante pour le premier type de station mobile, et de quatrièmes données de liaison montante pour le second type de station mobile, les troisièmes données de liaison montante étant multiplexées par division fréquentielle avec les quatrièmes données de liaison montante dans la seconde trame.

2. Le procédé de la revendication 1, dans lequel la communication des données dans la supertrame véhiculant des informations selon des technologies d'accès sans fil différentes comprend la communication des données dans la supertrame véhiculant des informations selon une technologie d'accès sans fil WiMax et des informations selon une technologie d'accès sans fil IEEE 802.16m.

3. Le procédé de la revendication 1, comprenant en outre:
la délivrance d'une troisième trame contenant des données de liaison descendante multiplexées par division temporelle pour des types différents de stations mobiles.

4. Le procédé de la revendication 1, dans lequel le premier type de station mobile comprend au moins une station mobile WiMax, et le second type de station mobile comprend au moins une station mobile IEEE 802.16m.

5. Le procédé de la revendication 1, dans lequel les trames de types différents comprennent une première trame avec des sous-trames de longueurs égales, et une seconde trame avec des sous-trames de longueurs différentes.

6. Un noeud de communication sans fil comprenant:
une interface vers une liaison sans fil; et
un processeur configuré pour permettre:
la communication de données insérées dans une supertrame pour véhiculer des trames sur la liaison sans fil, la supertrame comprenant une concaténation configurable de trames de types différents pour véhiculer des informations selon des technologies d'accès sans fil différentes;
dans lequel une première trame (700) des trames de types différents comprend des premières données de liaison montante pour un premier type de station mobile qui opère selon une première technologie d'accès sans fil, et des secondes données de liaison montante pour un second type de station mobile qui opère selon une seconde technologie d'accès sans fil différente, les premières données de liaison montante étant multiplexées par division temporelle avec les secondes données de liaison montante; et
une seconde trame (702A) des trames de types différents comprend des troisièmes données de liaison montante pour le premier type de station mobile, et des quatrièmes données de liaison montante pour le second type de station mobile, les troisièmes données de liaison montante étant multiplexées par division fréquentielle avec les quatrièmes données de liaison montante dans la seconde trame.

7. Le noeud de communication sans fil de la revendication 6, dans lequel la supertrame possède un entête qui spécifie un nombre configurable de trames de chacun des types différents.

8. Le noeud de communication sans fil de la revendication 7, dans lequel l'entête de supertrame spécifie un ou plusieurs de ce qui suit : (1) s'il y a lieu ou non d'utiliser des sous-trames multiplexées par division temporelle et multiplexées par division fréquentielle ; (2) un ratio d'une quantité de données selon une première technologie d'accès sans fil par rapport à une quantité de données selon une seconde technologie d'accès sans fil ; et (3) un nombre de points de commutation de liaison descendante/liaison montante par trame.

9. Le noeud de communication sans fil de la revendication 8, dans lequel chacune des première et seconde trames comprend des données de liaison descendante multiplexées par division temporelle.

10. Le noeud de communication sans fil de la revendication 6, dans lequel les trames de types différents comprennent une première trame avec des sous-trames de longueurs égales, et une seconde trame avec des sous-trames de longueurs différentes.

11. Le noeud de communication sans fil de la revendication 10, dans lequel la première trame possède une longueur temporelle définie entre entêtes d'une première technologie d'accès sans fil, et la première trame comprend un entête unique selon une seconde technologie d'accès sans fil différente, et dans lequel la seconde trame a une longueur temporelle définie entre entêtes de la première technologie d'accès sans fil, et la seconde trame comprend une pluralité d'entêtes selon la seconde technologie d'accès sans fil.

12. Un dispositif de mémorisation comprenant au moins un support de mémorisation lisible par calculateur contenant des instructions qui, lorsqu'elles sont exécutées, font en sorte qu'un noeud de communication sans fil mette en oeuvre un procédé selon l'une des revendications 1 à 5.
